# EUROPEAN PATENT APPLICATION

(11) **EP 1 954 093 A1**
(43) Date of publication of application: **06.08.2008**
(21) Application number: 05813846.2
(22) Date of filing: 25.11.2005
(51) Int. Cl.: H04Q 11/00

(54) **ROUTE SELECTING METHOD OF MULTICAST SERVICE IN AUTOMATICALLY SWITCHED OPTICAL NETWORK**

(71) Applicant: ZTE Corporation, Shenzhen, Guangdong 518057 (CN)
(72) Inventor: GAO, Peng, Guangdong 518057 (CN); SUN, Desheng, Guangdong 518057 (CN); KE, Ming, Guangdong 518057 (CN)
(74) Representative: Gymer, Keith Francis
(86) International application number: PCT/CN2005/002006
(87) International publication number: WO 2007/059652

(57) **Abstract**

This invention discloses a routing method for multicast service in automatic switched optical network (ASON). In the method, it is to decompose a complex multicast service connection routing problem into a processing of multiple point-to-point connection routings, realize link resource sharing of multicast service in route selecting way, solve the problem in establishing, modifying and recovering multicast service connection in ASON network, and the method has the advantages of simplicity and reliability.

## Description

### Technical Field

The present invention relates to optical network field, especially to a routing selecting method for multicast service in automatic switched optical network.

### Technology Background

Optical network, such as OTN (Optical Transmission Network), WDM (Wavelength-Division Multiplexing), SDH (Synchronous Digital Hierarchy) or SONET (Synchronous Optical Network) transmission network, has already been widely used in the telecommunication field.

Automatic switched optical network (ASON) is a hot study subject in optical network field in recent years. ITU-TG.8080 standard proposes the idea of ASON, to fulfill the function of ASON network by setting special Control Plane (CP). ITU-TG.7715 standard determines the architecture and components of the routing part in ASON network as well as the routing information format and the constrained routing methods of routing information that provide realization standards for the routing inquiries of the connection establishment.

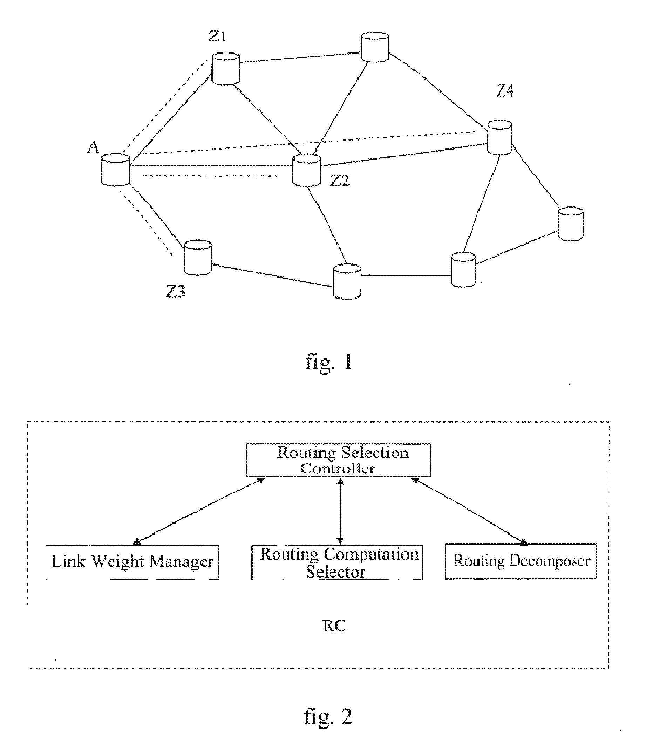

In recent years, the fast growing internet business promotes the needs for multicast service. The multicast technology has been widely applied in data network, such as broadcast TV etc. As shown in fig.1, the service only involves one user sender and multiple service receivers, such as the sender A and the receivers Z1, Z2, Z3 and Z4 in fig.1. In packets-based network, the multicast technology has already been widely used; however, it is hard to realize the multicast technology in the circuit-based or wavelength-based optical network. In recent years, although the multicast technology has already been determined by ASON as a requirement for realization, the related ASON standards still haven't provide the realization methods.

### Summary of the Invention

The technical problem to be solved in the present invention is to provide a routing method for multicast service in automatic switched optical network and offers a realization scheme in routing selecting way so as to solve the problem that the current ASON network could not provide the multicast service.

The present invention provides a routing selecting method for multicast service in automatic switched optical network. It uses routing controller to realize the routing for establishing multicast connection, comprising the following steps:
(1) the routing controller monitors the routing inquiry request for establishing multicast connection from the connection controller;
(2) the routing controller generates the routing database view for the current routing based on the received routing inquiry request;
(3) the routing controller computes the multicast routing based on the generated routing database view in order to guarantee the total link weight between the multicast service source point and multiple multicast service receiving points to be minimum;
(4) the routing controller decomposes the point-to-multipoint multicast routing tree into multiple point-to-point routings based on the computation result of multicast routing;
(5) the routing controller returns the routing computation result to the routing connector that inquires the routing.

Wherein, said routing controller comprises routing selection controller, link weight manager, routing computation selector and routing decomposer.

Said step (2) comprises:
the routing selection controller extracts the constrained condition from the routing inquiry request;
the routing selection controller calls the link weight manager;
the link weight manager generates the routing database view for the current routing based on the constrained condition;
The constrained condition in said routing inquiry request is the minimum number of hops;

In the routing database view generated by said link weight manager, the weight of each link is modified to be the same value.

Said step (3) comprises:
the routing selection controller calls the routing computation selector based on the generated routing database view in order to compute the multicast routing;
the routing computation selector employs the method of minimum spanning tree to compute the multicast routing based on the requirement of sharing bandwidth by multicast service;
the routing computation selector returns the multicast routing computation result to the routing selection controller.

Said step (4) comprises:
the routing selection controller calls routing decomposer based on the received multicast routing computation result;
the routing decomposer decomposes the point-to-multipoint multicast routing tree into multiple point-to-point routings.

The present invention also provides a routing selecting method for multicast service in automatic switched optical network. In the established multicast connection, the routing controller realizes the routing for adding multicast branch connection, comprising the following steps:
(1) the routing controller monitors the routing inquiry request for adding multicast branch connection from the connection controller;
(2) the routing controller generates the routing database view for the current routing based on the received routing inquiry request;
(3) the routing controller computes the multicast routing based on the generated routing database view in order to guarantee that the weight of the new added multicast branch link is minimum;
(4) the routing controller, based on the multicast routing computation result, decomposes the point-to-point connection routing between the multicast service source point and the new added multicast service receiving point from the multicast tree;
(5) the routing controller returns the routing computation result to the routing connector that inquires the routing.

Wherein, said routing controller comprises routing selection controller, link weight manager, routing computation selector and routing decomposer.

Said step (2) comprises:
the routing selection controller extracts the constrained condition from the routing inquiry request;
the routing selection controller calls the link weight manager;
the link weight manager generates the routing database view for the current routing based on the constrained condition;
The constrained condition in said routing inquiry request is the minimum number of hops;

In the routing database view generated by said link weight manager, the weight of each link is modified to be the same value.

Said step (3) comprises:
the routing selection controller calls the routing computation selector based on the generated routing database view in order to compute the multicast routing;
based on the requirements of sharing bandwidth by multicast service as well as not changing the previous multicast routing, the routing computation selector computes the multicast routing by employing the method of the shortest path from the new added multicast service receiving point to the multicast tree;
the routing computation selector returns the multicast routing computation result to the routing selection controller.

Said step (4) comprises:
the routing selection controller calls the routing decomposer based on the received multicast routing computation result;
the routing decomposer decomposes the point-to-point connection routing between the multicast service source point and new added multicast service receiving point from the multicast tree.

The present invention also provides a routing selecting method for multicast service in automatic switched optical network. In the established multicast connection, the routing controller realizes the routing for recovering multicast branch connection, comprising the following steps:
(1) the routing controller monitors the routing inquiry request for recovering multicast branch connection from the connection controller;
(2) the routing controller generates the routing database view for the current routing based on the received routing inquiry request;
(3) the routing controller, based on the generated routing database view, computes a recovering connection routing between the multicast service source point and the destination branch node in order to guarantee that the link weight of recovering connection routing in current computation is minimum;
(4) the routing controller returns the routing computation result to the routing connector that inquires the routing;

Wherein, said routing controller comprises routing selection controller, link weight manager, routing computation selector and routing decomposer.

Said step (2) comprises:
the routing selection controller extracts the constrained condition from the routing inquiry request;
the routing selection controller calls the link weight manager;
the link weight manager generates the routing database view for the current routing based on the constrained condition;
The constrained condition in said routing inquiry request is the minimum number of hops;

In the routing database view generated by said link weight manager, the weight of each link is modified to be the same value.

Said step (3) comprises:
the routing selection controller calls the routing computation selector based on the generated routing database view in order to compute the multicast routing;
the routing computation selector computes a recovering connection routing from the multicast service source point to the destination branch node by employing the method of the shortest path;
the routing computation selector returns the multicast routing computation result to the routing selection controller.

The present invention decomposes a complex multicast service connection routing problem into multiple point-to-point connection routing processing. Furthermore, it realizes the link resources sharing of multicast service in routing selecting way, solves the problems of connection establishment, modification and recovery for the ASON network in supporting multicast service, and has the advantages of simplicity and reliability.

### Brief Description of the Drawings

Figure 1 is a schematic view that multicast service is supported in ASON network;
Figure 2 is a schematic view of components of routing controller in the multicast function in ASON network according to the embodiments of the invention;
Figure 3 is a schematic view of multicast connection routing tree in ASON network according to the embodiments of the invention;
Figure 4 is a schematic view that the multicast connection routing tree in ASON network is decomposed into point-to-point connection routing according to the embodiments of the invention;
Figure 5 is a schematic view of the shortest paths between the new added multicast point in ASON network to all the points of multicast routing tree according to the embodiments of the invention;
Figure 6 is a schematic view that the multicast connection routing tree of multicast service receivers is added in ASON network according to the embodiments of the invention;
Figure 7 is a schematic view that the multicast service branch connection routing is recovered in ASON network according to the embodiments of the invention.

### Preferred Embodiments of the Invention

The core idea of present invention is to decompose the point-to-multipoint multicast connection routing inquiry into multiple point-to-point connection routings based on the architecture of ASON network, inquiry the type of multicast service routing by connection control, and apply different routing selection methods so as to realize bandwidth sharing of multicast service.

The routing controller (RC) of this invention is consisted of routing selection controller, link weight manager, routing computation selector and routing decomposer.

The following part combines the drawings and the embodiments to further describe the present invention.

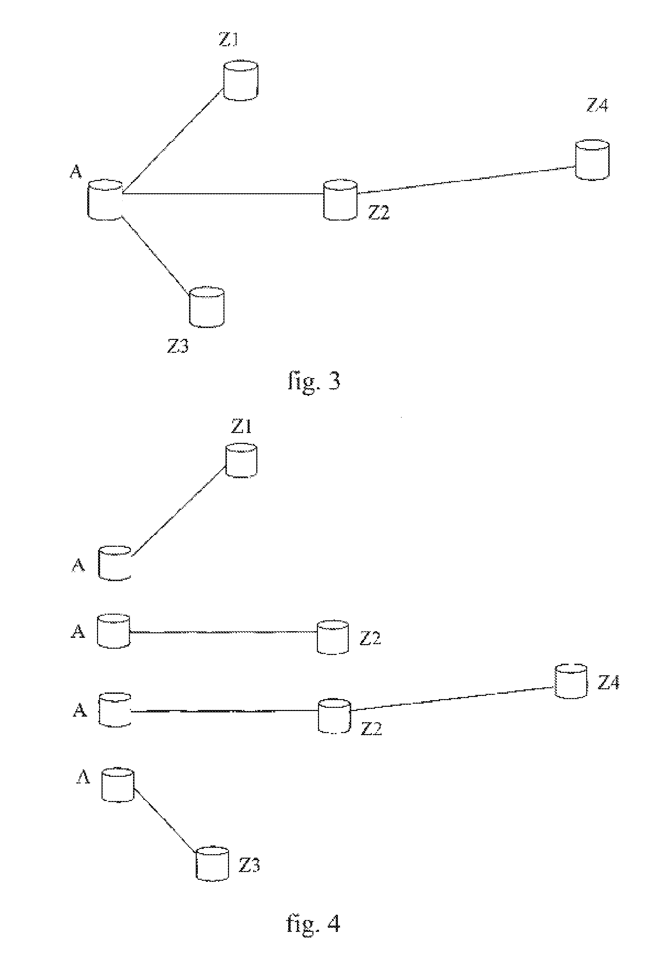

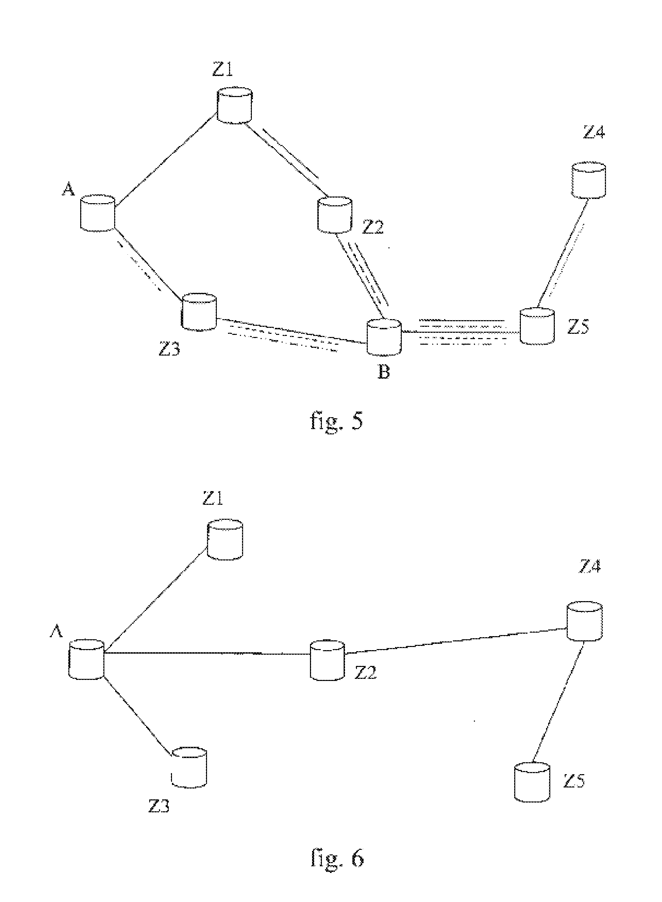

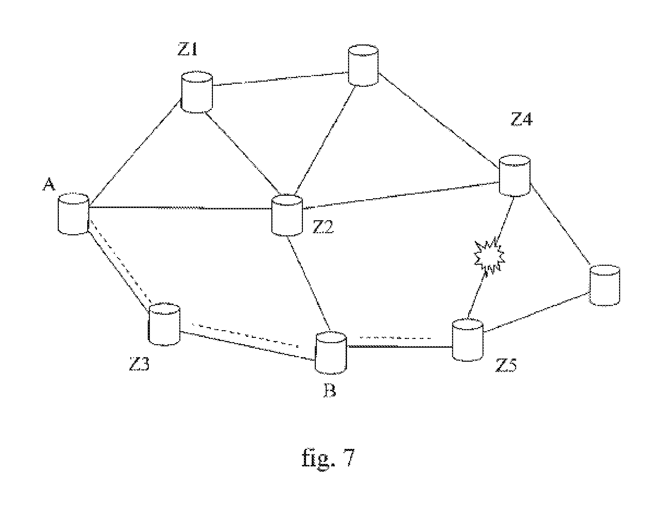

Wherein, figure 1 is already discussed in the part of technical background; figure 2 is a schematic view of components of routing controller in the multicast function in ASON network; figure 3 is a schematic view of multicast connection routing tree of the multicast service as shown in figure 1 supported in ASON network; figure 4 is a schematic view that the multicast connection routing tree of figure 3 is decomposed into point-to-point connection routing; figure 5 is a schematic view of the shortest paths between the new added multicast point of ASON network to all the points of multicast connection routing tree as shown in figure 3; figure 6 is a schematic view of adding connection routing tree of multicast service receiver in ASON network on the basis of the multicast service shown in figure 1; figure 7 is a schematic view of recovering multicast branch connection routing in ASON network on the basis of the multicast service shown in figure 6.

By referring to figures 1, 2, 3 and 4, the first embodiment, which applies the source routing scheme, illustrates the implementing scheme of the multicast connection routing selection of the present invention by establishing a multicast connection where A network unit is service sender, Z1, Z2, Z3 and Z4 are service receivers.

The detailed implementing scheme includes the following steps:
Step 1: as shown in figure 1, the control plane RC of ASON network unit A detects the routing inqury request (the sender is A; the receivers are Z1, Z2, Z3 and Z4) of establishing multicast connection from the Connection Controller (CC), then it is to proceed to the next step;
Step 2: after said RC discribed in step1 receives the routing inqury request, the further processing can be decomposed as the following: the routing selection controller extracts the constrained condition from the routing inqury request, said constrained condition of the routing inqury request is set as the minimum number of hops; the routing weight manager, according to the constrained condition of the minimum number of hops, modifies the weight of each link to be the same value, such as one; the link view (RDB view) with the equal weight value will be used in the current routing computation, then it is to proceed to the next step;
Step 3: the routing selection controller in RC calls the routing computation selector based on the RDB view generated in step 2, and sends routing computation request to the routing computation selector in order to compute the multicast routing, then it is to proceed to the next step;
Step 4: after receiving the routing computation request from step 3, the routing computation selector, based on the requirement of multicast service sharing bandwidth, employs the method of minimum spanning tree to compute the connection routing, in order to guarantee that the total link weight between the connection source of multicast service and multiple destinations is minimum; figure 3 shows the minimum spanning tree of the multicast service with spanning tree weight being four (the weight of each link is one), which is the minimum weight tree; from the perspective of routing, A-Z4 and A-Z2 share the link bandwidth of A-Z2; the routing computation selector returns the computation result to the routing selection controller, then it is to proceed to the next step;
Step 5: after receiving the multicast routing computation result from step 4, the routing selection controller calls the routing decomposer and decomposes the point-to-multipoint multicast routing tree into multiple point-to-point routings; figure 4 is the schematic view of decomposing the multicast connection routing tree of figure 3 into four (A-Z1, A-Z2, A-Z3, A-Z4) point-to-point connection routings;
Step 6: RC returns the routing computation result to the CC that inquires routing.

By referring to figures 1, 2, 3, 5 and 6, the second embodiment, which applies the source routing scheme, takes the example in which said multicast services A, Z1, Z2, Z3 and Z4 add the multicast service receiver Z5 to illustrate the routing selection scheme of adding multicast branch connection according to the present invention.

The detailed scheme comprises the following steps:
Step 1: as shown in figure 1, the control plane RC of the ASON network unit A detects the routing inqury request ( the source multicast service A; the receivers are Z1, Z2, Z3, Z4; the new added multicast service receiving point Z5 ) of adding multicast branch connection from the Connection Controller (CC), then it is to proceed to the next step;
Step 2: after said RC discribed in step 1 receives the routing inqury request, the further processing can be decomposed as the following: the routing selection controller extracts the constrained condition from the routing inqury request, said constrained condition of the routing inqury request is set as the minimum number of hops; the routing weight manager, based on the constrained condition of the minimum number of hops, modifies the weight of each link to be the same value, such as one; the link view (RDB view) with the equal weight value will be used in the current routing computation, then it is to proceed to the next step;
Step 3: the routing selection controller in RC calls the routing computation selector based on the RDB view generated in step 2, and sends the routing computation request to the routing computation selector in order to compute the multicast routing, then it is to proceed to the next step;
Step 4: after receiving the routing computation request from step 3, the routing computation selector, based on the requirements of multicast service sharing bandwidth as well as no change to the previous multicast routing, employs the method of the shortest path from the new added multicast point to the multicast tree to compute the connection routing so as to guarantee that the link weight of the current new added multicast branch to be the minimum; figure 3 shows the minimum spanning tree of multicast service; figure 5 shows the shortest paths between the new added multicast node to all the nodes of the minimum spanning tree as shown in figure 3; the shortest path between Z5 and A is: Z5-B-Z3-A; the shortest path between Z5 and Z1 is: Z5-B-Z2-Z1; the shortest path between Z5 and Z2 is: Z5-B-Z2; the shortest path between Z5 and Z3 is: Z5-B-Z3; the shortest path between Z5 and Z4 is: Z5-Z4; the shortest path between the new added multicast point Z5 and the multicast tree is : Z5-Z4; figure 6 shows the multicast connection routing tree after Z5 is added; the routing computation selector returns the computation result to the routing selection controller, then it is to proceed to the next step;
Step 5: after receiving the multicast routing computation result from step 4, the routing selection controller calls the routing decomposer, and decomposes the point-to-point connection routing between the multicast service source point and the new added multicast service receiving point from the multicast tree; the new added multicast point-to-point connection routing in figure 6 is: A-Z2-Z4-Z5.

Step 6: RC returns the routing computation result to the CC that inquires routing.

By referring to figures 1, 2, 6, and 7, the third embodiment illustrates the routing scheme of the multicast service recovering the connection by taking the example in which there occurs a malfuction between said multicast service A and the branch link of Z4-Z5 in multicast service Z1, Z2, Z3, Z4 and Z5, and the routing of the branch link is recovered from the multicast service source point to the multicast branch Z5.

The detailed scheme comprises the following steps:
Step 1: as shown in figure 1, the control plane RC of the ASON network unit A detects the routing inqury request (as shown in figure 6, the source multicast service is A; the receivers are Z1, Z2, Z3, Z4 and Z5; the malfunction occurs in multicast branch Z5, and it is needed to recover the connection of Z5 ) of recovering connection from the Connection Controller (CC), then it is to proceed to the next step;
Step 2: after said RC receives the routing inqury request in step1, the further processing can be decomposed as the following: the routing selection controller extracts the constrained condition from the routing inqury request, said constrained condition of the routing inqury request is set as the minimum number of hops; the routing weight manager, based on the constrained condition of the minimum number of hops, modifies the weight of each link to be the same value, such as one; the link view (RDB view) with the equal weight value will be used in the current routing computation, then it is to proceed to the next step;
Step 3: the routing selection controller in RC calls the routing computation selector based on the RDB view generated in step 2, and sends the routing computation request to the routing computation selector in order to compute the multicast routing, then it is to proceed to the next step;
Step 4: after receiving the routing computation request from step 3, the routing selection controller applies the method of shortest path to compute a recovering connection routing between the multicast service source point and the destination branch node so as to guarantee that the weight of the current computed recovering connection routing is the minimum; as shown in figure 7, the computed recovering connection routing is A-Z3-B-Z5; from the perspective of routing, the recovering connection routing A-Z3-B-Z5 and the multicast branch A-Z3 do not share the link resources; the routing computation result is returned to the routing selection controller;
Step 5: RC returns the routing computation result to the CC that inquires routing.

### Industrial Applicability of the Invention

The present invention decomposes a complex multicast service connection routing problem into a processing of multiple point-to-point connection routings, realizes link resource sharing of multicast service from the perspective of routing, solves the problem in establishing, modifying and recovering multicast service connection in ASON network, and has the advantages of simplicity and reliability.

## Claims

1. A routing method for multicast service in an automatic switched optical network, in which a routing controller is used to realize routing for establishing a multicast connection, **characterized in** including the following steps of:
(1) the routing controller monitoring a routing inquiry request of establishing the multicast connection from a connection controller;
(2) the routing controller generating a routing database view for the current routing based on the received routing inquiry request;
(3) the routing controller computing a multicast routing based on the generated routing database view in order to guarantee a total link weight between a multicast service source point and multiple multicast service receiving points to be the minimum;
(4) the routing controller decomposing a point-to-multipoint multicast routing tree into multiple point-to-point routings based on a multicast routing computation result;
(5) the routing controller returning the routing computation result to a routing connector that inquires the routing.

2. The method of claim 1, wherein said routing controller comprises a routing selection controller, a link weight manager, a routing computation selector and a routing decomposer; said step (2) includes:
the routing selection controller extracting constrained condition from the routing inquiry request;
the routing selection controller calling the link weight manager;
the link weight manager generating the routing database view for the current routing based on the constrained condition;
said step (3) includes:
the routing selection controller calling the routing computation selector based on the generated routing database view in order to compute the multicast routing;
the routing computation selector employing a method of minimum spanning tree to compute the multicast routing based on a requirement of multicast service sharing bandwidth;
the routing computation selector returning the multicast routing computation result to the routing selection controller;
said step (4) includes:
the routing selection controller calling the routing decomposer based on the received multicast routing computation result;
the routing decomposer decomposing point-to-multipoint multicast routing tree into multiple point-to-point routings.

3. The method of claim 2, wherein said constrained condition in the routing inquiry request is a minimum number of hops.

4. The method of claim 2, wherein in the routing database view generated by the link weight manager, a weight of each link is modified to be a same value.

5. A routing method for multicast service in automatic switched optical network, in which a routing controller is used to realize routing for adding a multicast branch connection in established multicast connection, **characterized in** comprising the following steps of:
(1) the routing controller monitoring a routing inquiry request of adding the multicast branch connection from a connection controller;
(2) the routing controller generating routing database view for the current routing based on the received routing inquiry request;
(3) the routing controller computing a multicast routing based on the generated routing database view in order to guarantee a link weight of the new added multicast branch to be the minimum;
(4) the routing controller decomposing a point-to-point connection routing from a multicast service source point to a new added multicast service receiving point from a multicast tree based on a multicast routing computation result;
(5) the routing controller returning the routing computation result to a routing connector that inquires the routing.

6. The method of claim 5, wherein said routing controller comprises a routing selection controller, a link weight manager, a routing computation selector and a routing decomposer; said step (2) includes:
the routing selection controller extracting constrained condition from the routing inquiry request;
the routing selection controller calling the link weight manager;
the link weight manager generating the routing database view for the current routing based on the constrained condition;
said step (3) includes:
the routing selection controller calling the routing computation selector based on the generated routing database view in order to compute the multicast routing;
the routing computation selector, based on a requirement of multicast service sharing bandwidth as well as no change to the previous multicast routing, employing a method of a shortest path from the new added multicast service receiving point to the multicast tree in order to compute the multicast routing;
the routing computation selector returning the multicast routing computation result to the routing selection controller;
said step (4) includes:
the routing selection controller calling the routing decomposer based on the received multicast routing computation result;
the routing decomposer decomposing the point-to-point connection routing from the multicast service source point to the new added multicast service receiving point from the multicast tree.

7. The method of claim 6, wherein said constrained condition in the routing inquiry request is a minimum number of hops.

8. The method of claim 6, wherein in the routing database view generated by the link weight manager, a weight of each link is modified to be a same value.

9. A routing method for multicast service in automatic switched optical network, in which a routing controller is used to realize routing for recovering a multicast branch connection in established multicast connection, **characterized in** comprising the following steps of:
(1) the routing controller monitoring a routing inquiry request of recovering the multicast branch connection from a connection controller;
(2) the routing controller generating a routing database view for the current routing based on the received routing inquiry request;
(3) the routing controller computing a recovering connection routing between a multicast service source point to a destination branch node based on the generated routing database view in order to guarantee a link weight of recovering connection routing in current computation to be the minimum;
(4) the routing controller returning a routing computation result to a routing connector that inquires the routing.

10. The method of claim 9, wherein said routing controller comprises a routing selection controller, a link weight manager, a routing computation selector and a routing decomposer; said step (2) includes:
the routing selection controller extracting constrained condition from the routing inquiry request;
the routing selection controller calling the link weight manager;
the link weight manager generating the routing database view for the current routing based on the constrained condition;
said step (3) includes:
the routing selection controller calling the routing computation selector based on the generated routing database view in order to compute the multicast routing;
the routing computation selector employing a method of a shortest path to compute a recovering connection routing from the multicast service source point to the destination branch node;
the routing computation selector returning the multicast routing computation result to the routing selection controller.

11. The method of claim 10, wherein said constrained condition of the routing inquiry request is a minimum number of hops.

12. The method of claim 10, wherein in the routing database view generated by the link weight manager, a weight of each link is modified to be a same value.
